# EUROPEAN PATENT APPLICATION

(11) **EP 1 443 787 A1**
(43) Date of publication of application: **04.08.2004**
(21) Application number: 03027363.5
(22) Date of filing: 27.11.2003
(51) Int. Cl.: H04Q 7/38

(54) **Handover control method of performing handover for a wireless mobile device**

(30) Priority: 29.01.2003 JP 2003019938
(71) Applicant: Evolium S.A.S., 75008 Paris (FR)
(72) Inventor: Ogawa, Koji, Yokosuka Kanagawa (JP)
(74) Representative: Kugler, Hermann, Dipl.-Phys.

(57) **Abstract**

[PURPOSE] To reliably execute handover processing when a wireless mobile device speedily moves toward another cell zone and to mitigate the load of a base station control apparatus's executing handover processing when the wireless mobile station slowly moves.

[CONSTRUCTION] A handover control part 12 of a base station control apparatus 1, as means for obtaining the moving speed of a wireless mobile device, calculates the speed of the transition of deterioration in level of the wireless reception quality according to information that regards the level of the wireless reception quality and that is measured in the wireless mobile device and is reported therefrom, and thereby estimates the exit speed at which the wireless mobile device exits from the current cell zone thereof. The handover control part 12, when the deterioration speed is rapid, minimizes the report-period for reporting the level of the wireless reception quality and, when that deterioration speed is gentle, determines a threshold value for the level of the wireless reception quality which becomes a clue for the succeeding reports, thereby monitors the contents of the reports.

## Description

### [DETAILED DESCRIPTION OF THE INVENTION]

### [FIELD OF THE INVENTION]

The present invention relates to a handover control method of performing handover control of a wireless mobile device, a base station control apparatus, and the wireless mobile device and, more particularly, to a handover control method of performing handover control of a wireless mobile device that controls handover processing according to the change in time of the wireless channel reception quality that is measured on the wireless mobile device side and that is reported to the base station control apparatus via a base station, the base station control apparatus, and the wireless mobile device.

### [BACKGROUND OF THE INVENTION]

Conventionally, a wireless mobile device that moves within each of a plurality of receivable areas over a wireless network and between two adjacent of those receivable areas needs to ensure as a fixed level the reception quality quality (hereinafter abbreviated to "the wireless reception quality" or, alternatively, for the same meaning, as "the wireless reception quality level") corresponding to a wireless channel that that device is receiving. To this end, the wireless mobile device executes handover processing (the processing of switching to the wireless channel corresponding to a base station that belongs to another reception area) when the wireless reception quality has fallen below a prescribed threshold value. To this end, it has means that measures the reception quality and means that, by comparing the level of the wireless reception quality that has been measured with a prescribed threshold value, determines the timing with which to execute the handover processing. As a method of using that measured result of the wireless reception quality, there are mainly two methods that will be described below.

One of those methods is for the wireless mobile device itself to refer to that measured result and to execute handover processing that includes, for example, processing of, when the reception level has fallen below a prescribed threshold value that is previously instructed to be used from the base station (or the base station control apparatus), transmitting to another base station a request to establish a link channel between itself and the other base station.

As one example of the method of the wireless mobile device's referring to the wireless reception quality, there is disclosed a method of measuring in the wireless mobile device the tendency of fluctuation (the amount of fluctuation), relative to time, of the reception level from the base station, and determining, on the wireless mobile device side, whether that amount of fluctuation is greater than a prescribed value, and, according to the determined result, switching the threshold value constituting a condition on which to execute handover processing in the wireless mobile device, to any one of a high or a low threshold value (for example, see a PATENT DOCUMENT 1).

Also, the other method of using the measured result of the reception quality is for the wireless mobile device to report the measured result of the reception quality to the base station or to report it to the base station control apparatus via the base station and, by receiving the instruction from the base station (or the base station control apparatus) that is made as that response, to execute handover processing (namely the wireless-channel switching process followed by the change of the base station). As this reporting means for reporting the reception quality, there are a method of reporting when the level thereof has exceeded an upper limit threshold value or fallen below a lower limit threshold value that the base station control apparatus side designates beforehand and a method of reporting at time intervals that the base station (or the base station control apparatus) designates beforehand.

Incidentally, how to use these methods of reporting is not expressly described and is dependent on the form of execution on the side of the base station (or the base station control apparatus). However, the base station (or the base station control apparatus) side instructs the wireless mobile device to execute handover depending on the same handover execution condition. And it does that without fundamentally considering the movement characteristic as measured relative to the passage of time every wireless mobile device (e.g. the acceleration of the wireless mobile device). And it adds or deletes the wireless resource on its own managing database. For this reason, on the wireless mobile device side, in some cases, the execution of handover is delayed, resulting in the occurrence of an accident that a prescribed level of communication signal cannot be ensured.

As the method intended to aim at improving that point in problem there is disclosed a method of, for example, comparing the measured result of the base station signal that is reported from the wireless mobile device at substantially fixed intervals, with a threshold value that is preset in the base station, thereby classifying that measured result into two kinds of value by determining whether it is greater than that threshold value, and comparing the counted result obtained by increasing or decreasing the counter correspondingly to that classified result, with another threshold value. This method, in addition, by doing so, calculates a value that becomes an indicator that indicates a value that becomes an indicator that indicates the relative speed (including a case where the wireless mobile device is kept stopped) of the wireless mobile device. The method then performs appropriate determination on the handover processing (e.g., see a PATENT DOCUMENT 2).

Also, there is disclosed a method wherein, there is provided means that, by measuring the speed (including the movement direction) of the mobile station (wireless mobile device), and building up the measured results in a wireless line control station that controls the base station, estimates the destination of movement of that mobile station, and which catches the unoccupied wireless channel that a base station has to that the estimated destination of movement of the mobile station belongs and switches the wireless channel that the mobile station is using to the unoccupied wireless channel that has been caught (e.g. see a PATENT DOCUMENT 3).

Also, as another method of controlling handover processing, there is disclosed a method wherein, there is provided on the base station side means that measures the level and/or quality of an up-link signal (report signal) that is lower than that corresponding to a prescribed trigger value and the signal of that is sent from the wireless mobile device and which, when the level and/or quality of the up-link signal (report signal) from a wireless mobile device that a base station is servicing has been measured as being lower than a prescribed trigger signal level, instructs other base stations, that are adjacent to that base station, to measure the level and/or quality of the up-link signal (report signal) of that wireless mobile device and executes handover processing the handover of that is switched to the base station wherein that measured result has been the best (e.g., see a PATENT DOCUMENT 4).

### [PATENT DOCUMENT 1]

Japanese Patent Application Laying Open No. 2000-197093

### [PATENT DOCUMENT 2]

Japanese Patent Application Laying Open No. 2001-503924

### [PATENT DOCUMENT 3]

Japanese Patent Application Laying Open No. 11-103480

### [PATENT DOCUMENT 4]

Japanese Patent Application Laying Open No. 2000-506320

### [PROBLEMS TO BE SOLVED BY THE INVENTION]

Meanwhile, in the above-described conventional methods of performing handover control of a wireless mobile device, in the case of the method wherein the wireless mobile device itself refers to the measured results, the load of the wireless mobile device's executing the processing become great and hence there is the point in problem that there is the possibility of the wireless mobile device's becoming a large-sized device that does not suit being carried with a user.

For example, in the case of the method shown in the PATENT DOCUMENT 1, as stated before, there are performed measuring in the wireless mobile device the tendency of fluctuation (the amount of fluctuation), relative to time, of the reception level from the base station, and determining, on the wireless mobile device side, whether that amount of fluctuation is greater than a prescribed value, and, according to the determined result, switching the threshold value constituting a condition on which to execute handover processing in the wireless mobile device, to any one of a high or a low threshold value. Therefore, the load of the wireless mobile device's executing the processing becomes excessively high and, in addition, the cost also becomes relatively high. Further, regarding the time interval at which to measure the reception level, although the literature does not described that that time interval is fixed, when that time interval is fixed, if the wireless mobile device is rapidly moving, that becomes the one which is relatively long for the relevant device. In some cases, measuring the relative speed of the wireless mobile device happens to become impossible.

Also, in the case of the method of reporting the wireless reception quality level from the wireless mobile device to the base station (or the base station control apparatus), as stated before, the base station (or the base station control apparatus) side instructs the wireless mobile device to execute handover depending on the same handover execution condition. And, in this case, it does that without fundamentally considering the movement characteristic as measured relative to the passage of time every wireless mobile device (e.g. the acceleration of the wireless mobile device). And it adds or deletes the wireless resource on its own managing database. For this reason, on the wireless mobile device side, in some cases, the execution of handover is delayed, resulting in that there occurs the point in problem that an accident that a prescribed quality level of communication signal cannot be ensured happens.

In the case of the method shown in the PATENT DOCUMENT 2 and intended to aim at improving that point in problem, as stated before, in some cases, the policy, itself, of measuring the relative speed of the wireless mobile device becomes so lengthy that it does not go in harmony with the actual status of the wireless mobile device. Namely, in the method shown in the PATENT DOCUMENT 2, as stated before, there are performed comparing the measured result of the base station signal that is reported from the wireless mobile device at substantially fixed intervals, with a threshold value that is preset in the base station, classifying that measured result into two kinds of value by determining whether it is greater than that threshold value, and comparing the counted result obtained by increasing or decreasing the counter correspondingly to that classified result, with another threshold value, and, in addition, by doing so, calculating a value that becomes an indicator that indicates a value that becomes an indicator that indicates the relative speed (including a case where the wireless mobile device is kept stopped) of the wireless mobile device, and, according to this result, performing appropriate determination on the handover processing. Therefore, it is self-evident that this measurement depends on the reporting that is performed at substantially fixed intervals. In a case, for example, where the wireless mobile device is rapidly moving, this time interval for performing that reporting becomes the one which is relatively long for the wireless mobile device. Therefore, in some cases, that report becomes unable to be reliably received in the base station and therefore it is possible that measuring the relative speed of the wireless mobile device will fail.

Also, in the case of the method shown in the PATENT DOCUMENT 3, as stated before, there is provided means wherein, by measuring the speed (including the movement direction) of the mobile station (wireless mobile device), and building up the measured results in a wireless line control station that controls the base station, estimates the destination of movement of that mobile station, and which catches the unoccupied wireless channel that a base station has to that the estimated destination of movement of the mobile station belongs and switches the wireless channel that the mobile station is using to the unoccupied wireless channel that has been caught. Therefore, the base station does not transmit an instruction that, as in the present invention, causes a change in the reporting period of the wireless mobile device according to the fluctuation, as measured relative to the passage of time, of the reception quality that is reported from the wireless mobile device. Therefore, the time interval at which the reception quality is reported becomes the one which is relatively long for the wireless mobile device. Therefore, in some cases, that report becomes unable to be reliably received by the wireless line control station and, therefore, specifying a base station that corresponds to the destination of movement of the wireless mobile device becomes impossible. Also, the burden of the estimation processing for estimating a base station that corresponds to the destination of movement of the wireless mobile device becomes weighed in the wireless line control station.

Incidentally, in the case of the method shown in the PATENT DOCUMENT 4, in a base station that is now in the course of servicing, or a base station that is adjacent to it, there is the need to measure the level and/or quality of an up-link signal (report signal) from the relevant wireless mobile device and in consequence the load of the processing's being executed in the base station becomes high. Therefore, in a case where a number of mobile stations each ensure the wireless channel and simultaneously transmit their calls, it is possible that the processing will become impossible to execute.

The present invention has been made in view of the above-described points in problem and has an object to provide a handover control method of performing handover control of a wireless mobile device that, in a case where the base station control apparatus has detected that the wireless mobile device is rapidly moving, instructs from the base station control apparatus setting to be short the report period in which there is reported the wireless reception quality level reported from the wireless mobile device to the base station control apparatus and that, on the other hand, by, in the base station control apparatus, estimating the wireless reception quality level that will come after the next one in the periods that have been set as above, enables reliable execution of the handover processing.

Another object of the present invention is to provide a handover control method which, by, in a case where the base station control apparatus has detected that the wireless mobile device is slowly moving, withdrawing executing the handover processing on the wireless mobile device side until the wireless reception quality changes to a low level, enables mitigating the processing burden of the base station control apparatus that follows the handover processing on the wireless mobile device side.

Another object of the present invention is to provide a base station control apparatus which, by, in a case where having detected that the wireless mobile device is rapidly moving, instructing the wireless mobile device to set to be short the report period in which the wireless mobile device reports the reception quality from it to the base station control apparatus via the base station and, simultaneously, in the base station control apparatus, estimating the wireless reception quality level that will come after the next relevant one in the periods that have been set as above, enables reliable execution of the handover processing.

Another object of the present invention is to provide a base station control apparatus which, by, in a case where the wireless mobile device is slowly moving, withdrawing executing the handover processing until the wireless reception quality changes to a low level, enables mitigating the processing burden of the wireless mobile device side.

Also, another object of the present invention is to provide a wireless mobile device which, by causing the base station control apparatus to detect a case wherein the wireless mobile device is rapidly moving, and, in this case, causing the report period, in which there is reported the wireless reception quality level reported from the wireless mobile device to the base station control apparatus via the base station, to be set to be short by the base station control apparatus and, simultaneously, causing the wireless reception quality level, that will come after the next one in the periods that have been set as above, to be estimated by the base station control apparatus, can cause reliable execution of the handover processing.

Further, another object of the present invention is to provide a wireless mobile device which, by causing the base station control apparatus to detect a case wherein the wireless mobile device is slowly moving and, in this case, being controlled in the way in which handover processing can be withdrawn from being executed until the reception quality changes to a low level, enables mitigating the processing burden of the base station control apparatus that follows the handover processing on the wireless mobile device side.

### [MEANS FOR SOLVING THE PROBLEMS]

To solve the above-described problems, a method of performing handover control of a wireless mobile device according to the present invention, which is executed in a wireless network that has a base station control apparatus that controls switching of a wireless channel of the mobile station via a base station that relays wireless communication of the mobile station, is characterized (claim 1) by comprising a deterioration speed calculation step of, according to a report made from the mobile station to the base station control apparatus and regarding a reception quality of a wireless channel that the mobile station is using, calculating the deterioration speed at which the level of the reception quality deteriorates; and a condition determining step of, according to the deterioration speed, determining a condition on which the reception quality is to be reported and/or a condition on which handover is to be triggered. Thereby, there is realized a handover control method of performing handover control of a wireless mobile device, which enables executing handover control correspondingly to the status of movement of the wireless mobile device.

Also, the handover control method of performing handover control of a wireless mobile device as described in claim 1, is characterized (claim 2) by comprising a periodical report instructing step of, when the level of the reception quality deteriorates at a speed that exceeds a prescribed deterioration speed, instructing the mobile station to periodically report the reception quality from the base station control apparatus; a periodical report executing step of executing the periodic report from the mobile station to the base station control apparatus according to the instruction from the base station control apparatus; a level estimating step of, according to the reported reception quality level, the period, and the deterioration speed, estimating the level of the reception quality that will come after the passage of a relevant one period of the periods; a comparing step of comparing the level of the reception quality that has been estimated and the handover execution threshold value; a handover execution instructing step of, according to the compared result, instructing the mobile station to execute handover from the base station control apparatus; and a handover executing step of, according to the instruction to execute the handover, executing handover in the mobile station. Thereby, there is realized a handover control method of performing handover control of a wireless mobile device that, at the time, as well, when the wireless mobile device is rapidly exiting from the current cell zone thereof, enables reliably executing handover processing.

In this case, although the report period can be made to a fixed minimum interval, it may be arranged that the report period be different according to the deterioration speed (claim 3), for example, by making the period of the report shorter as the deterioration speed goes higher.

Also, it may be arranged that, in a case where the base station control apparatus has not received the report within the report period that has been designated, instructing the execution of the handover be performed from the base station control apparatus to the mobile station (claim 4).

Also, the handover control method of performing handover control of a wireless mobile device as described in claim 1 to 4, is characterized (claim 5) by comprising a threshold value setting step of, when the level of the reception quality deteriorates at a speed that is lower than a prescribed deterioration speed, instructing stepwise changing threshold values for performing the next reports from the base station control apparatus to the mobile station; a reporting step of, when in the mobile station the level of the reception quality corresponding to the wireless channel of the mobile station has fallen below the threshold value, reporting in the mobile station; a detecting step of detecting that the level of the reception quality that has been reported has arrived at the handover execution threshold value; a handover execution instructing step of, according to the detected result, instructing the mobile station to execute handover from the base station control apparatus; and a handover executing step of, according to the instruction to execute the handover, executing handover in the mobile station. Thereby, there is realized a handover control method of performing handover control of a wireless mobile device which, when the wireless mobile device is slowly exiting from the current cell zone thereof, enables mitigating the load that is needed for the base station control apparatus's executing handover processing.

Also, a base station control apparatus according to the present invention, which is adapted to control switching of the wireless channel of a mobile station via a base station that relays wireless communication of the mobile station, is characterized (claim 6) by comprising deterioration speed calculation means that, according to a report made from the mobile station and regarding a reception quality of a wireless channel that the mobile station is using, calculates the deterioration speed at which the level of the reception quality deteriorates; and condition determining means that, according to the deterioration speed, determines a condition on which the reception quality is to be reported and/or a condition on which handover is to be triggered. As a result of this, there is realized a base station control apparatus which enables executing handover control correspondingly to the status of movement of the wireless mobile device.

Also, the base station control apparatus as described in claim 6, is characterized (claim 7) by comprising periodical report instructing means that, when the level of the reception quality deteriorates at a speed that exceeds a prescribed deterioration speed, instructs the mobile station to periodically report the reception quality; level estimating means that, according to the reported reception quality level, the period, and the deterioration speed, estimates the level of the reception quality that will come after the passage of a one period of the periods; and handover control means that, according to the estimated reception quality level, determines switching of the wireless channel of the mobile station, and which, thereby, even when the wireless mobile device is rapidly exiting from the current cell zone thereof, enables reliably executing handover processing.

Also, the base station control apparatus as described in claim 6, is characterized (claim 8) by comprising threshold value setting means that, when the level of the reception quality deteriorates at a speed that is lower than a prescribed deterioration speed, instructs stepwise changing threshold values for performing the next reports from the base station control apparatus to the mobile station, and which, thereby, when the wireless mobile device is slowly exiting from the current cell zone thereof, enables mitigating the load that is needed for the base station control apparatus's executing handover processing.

Also, the wireless mobile device according to the present invention, which is adapted to execute switching of a wireless channel corresponding thereto according to an instruction made from a base station control apparatus via a base station that relays the wireless communication, is characterized (claim 9) by comprising wireless reception quality measuring means that measures the reception quality of the wireless channel that the wireless mobile device is using; first reporting means that, when the level of the reception quality that has been measured has become lower than a threshold value that has been set beforehand or the threshold value instructed by the base station control apparatus to the wireless mobile device, reports the base station control apparatus; second reporting means that reports the reception quality that has been measured to the base station control apparatus in periods that the base station control apparatus instructs to the wireless mobile device; and handover executing means that executes switching of the wireless channel according to the instruction from the base station control apparatus. Thereby, there is realized a wireless mobile device which enables executing handover control correspondingly to the status of movement of the wireless mobile device.

### [EMBODIMENTS OF THE INVENTION]

Hereinafter, embodiments of a method of performing handover control, base station control apparatus, and wireless mobile device of the present invention will be explained in detail with reference to the drawings.

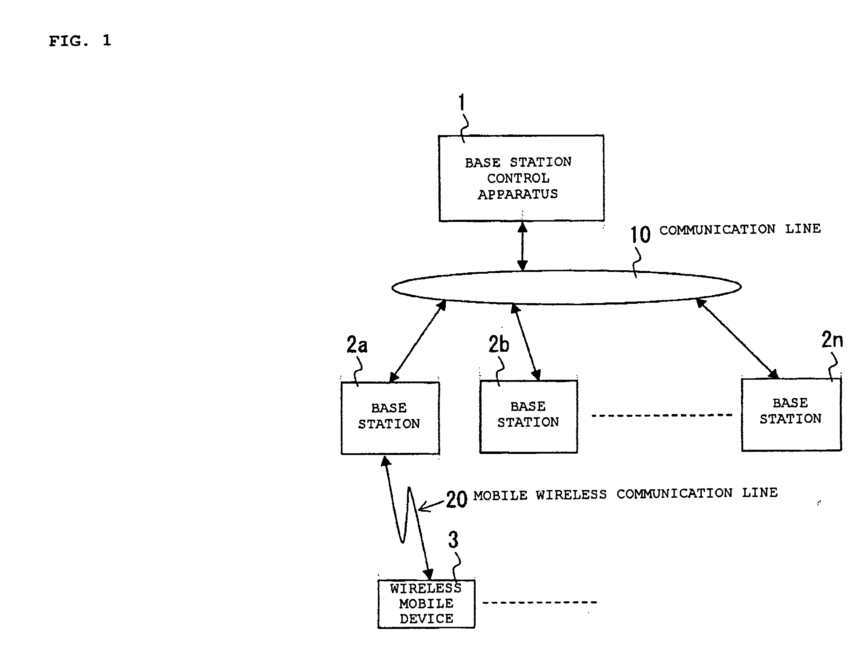

Fig. 1 is a construction view illustrating the entire construction of a system that adopts the method of performing handover control according to an embodiment of the present invention.

In the figure, the system that adopts the method of performing handover control according to this embodiment comprises a base station control apparatus 1 that controls a plurality of base stations via a communication line 10, base stations 2a to 2n that each relay the electric waves of a plurality of wireless mobile devices and that each are placed under the control of the base station control apparatus 1 via the communication line 10, and a wireless mobile device 3 (mobile station) the communication signal of that is relayed by a wireless channel (cell) the frequency band of which is ensured by the base station within any one of the base stations 2a to 2n and that is controlled from the base station control apparatus 1 via the base station.

The wireless mobile device 3 may be more than one in number. Each of the plurality of wireless mobile devices may belong to a different receivable area.

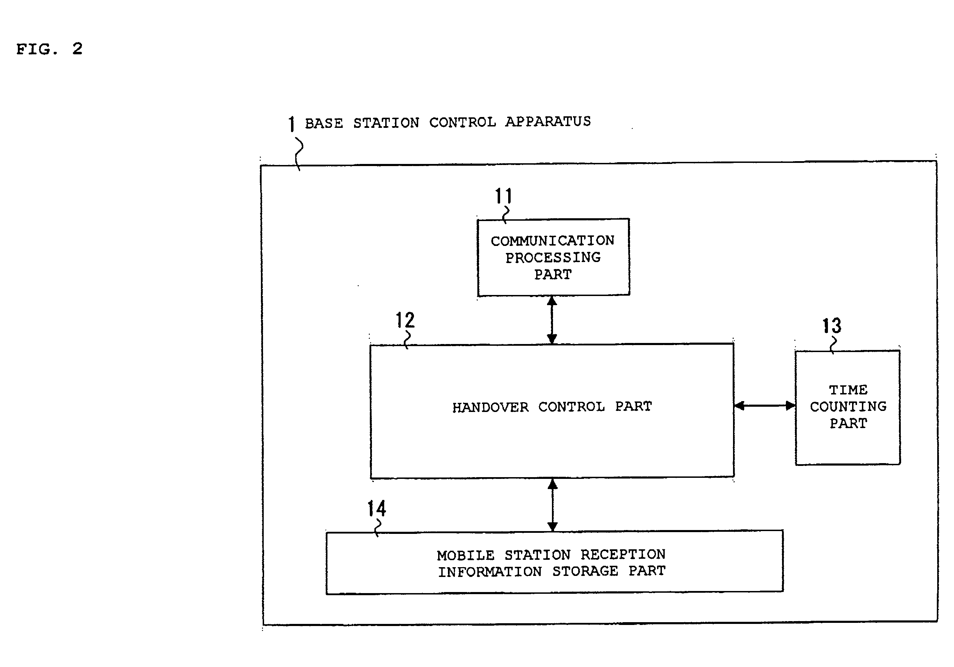

FIG. 2 is a construction view illustrating the construction of the base station control apparatus according to the embodiment of the present invention.

In that figure, the base station control apparatus 1 according to this embodiment comprises a communication processing part 11 that is connected to the base stations 2a to 2n via the communication line 10, a handover control part 12 that transmits an instruction for executing handover processing by determining the status of movement of the wireless mobile device 3, a time counting part 13 that performs time counting of the report interval (the time passage) at which the level of a wireless reception quality is reported from the wireless mobile device 3, and a mobile station reception information recording part 14 that records the reported content of the wireless reception quality of the wireless mobile device 3.

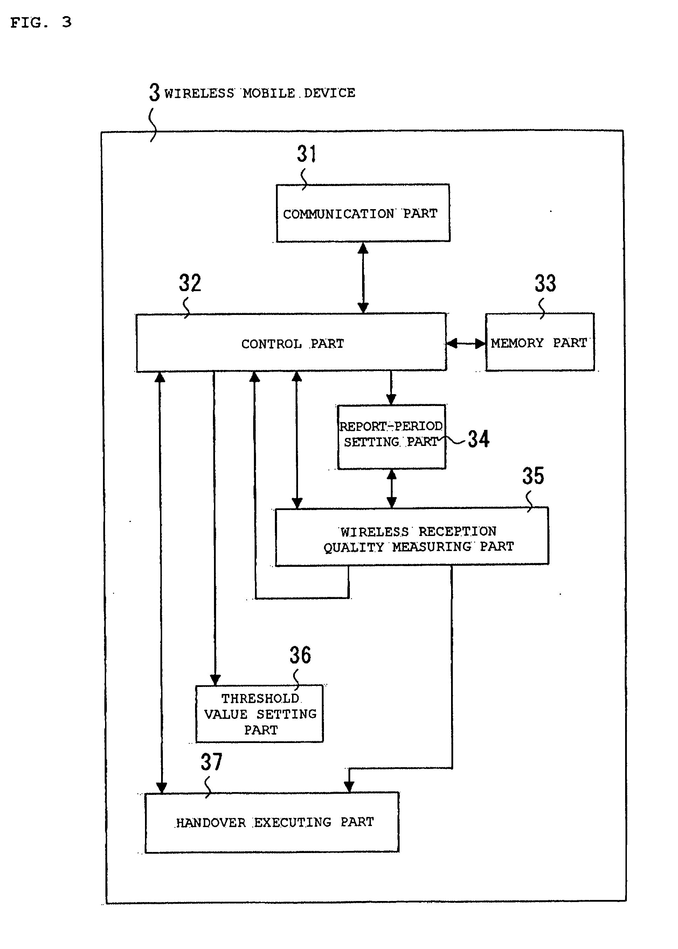

FIG. 3 is a construction view illustrating the construction of the wireless mobile device according to the embodiment of the present invention.

In that figure, the wireless mobile device 3 of this embodiment comprises a communication part 31 that, by being relayed by the base station in its area, makes communication between itself and this base station and communication between itself and another wireless mobile device, a control part 32 that controls the whole of the constituent elements, a memory part 33 that stores therein program and calculation data, a report-period setting part 34 that records therein the cyclic period in which the wireless reception quality is to be reported, a wireless reception quality measuring part 35 (wireless reception quality measuring means) that measures the wireless reception quality corresponding to the channel electric waves within the relevant area, a threshold value setting part 36 that records therein a threshold value that the base station control apparatus 1 has designated, and a handover executing part 37 (handover executing means) that executes handover processing according to an instruction signal from the base station control apparatus 1.

The memory part 33 can be constructed of a ROM, a RAM, or the like.

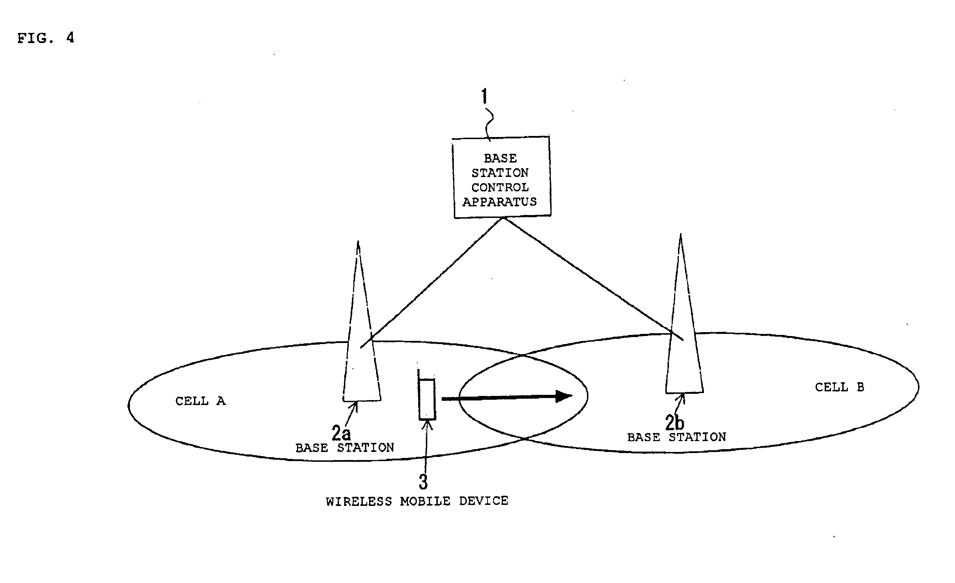

FIG. 4 is an explanatory view for explaining the method of performing handover control according to the embodiment of the present invention.

The circumstance illustrated in FIG. 4 is the one where, as the area where relay is possible by the wireless channel (cell), there exist a cell A that is formed by the base station 2a that is a relay station and a cell B that is formed by the base station 2b; and the wireless mobile device 3 within the cell A is now moving toward the cell B. The base station control apparatus 1 supports the base station 2a and the base station 2b each of which is a relay station.

In the handover control method according to the embodiment of the present invention, the base station control apparatus 1, as means for grasping the moving speed of the wireless mobile device 3, calculates the speed at which the deterioration in level of the wireless reception quality measured in the wireless mobile device 3 transits (hereinafter abbreviated to "the deterioration speed") (deterioration speed calculation means). As later described, depending on whether that deterioration speed is sharp or gentle, the apparatus 1 estimates the exit speed of the wireless mobile device 3 at which it is exiting from the current cell zone thereof, and thereby executes two ways of control.

Hereafter, with reference to FIGs. 1 to 4, the handover control method of this embodiment will sequentially be explained together with the functions of the base station control apparatus 1 and wireless mobile device 3.

Under the circumstance illustrated in FIG. 4, the wireless reception quality measuring part 35 of the wireless mobile device 3 measures the level of the wireless reception quality, then compares this measured value with a threshold value that is initially set in the threshold value setting part 36 and that is determined as a reporting level, and, when that measured result has fallen below that first reporting-level determination threshold value, notifies this effect to the control part 32. Upon receipt of that notification, the control part 32 transmits to the base station control apparatus 1 the report to the effect that the level of the wireless reception quality has fallen below the initially set threshold value, through the intermediary of the communication part 31 and the base station 2a that is a relay station (first reporting means).

The handover control part 12 of the base station control apparatus 1 receives the above-described report from the wireless mobile device 3, records the reception time of the above-described notification into the mobile station reception information recording part 14 by referring to the time counting part 13, then transmits to the wireless mobile device 3 a prescribed threshold value, which determines a reporting level, regarding the wireless reception quality, the level of that is to be reported next, via the communication processing part 11 and the base station 2a, and records that prescribed threshold value, as an initial value, in the mobile station reception information recording part 14 as well (this initial value becomes necessary later, as the initial value to the wireless reception quality level, when estimating the level of the wireless reception quality in the next one cyclic period).

Upon receipt of the above-described threshold value via the communication part 31, the control part 32 of the wireless mobile device 3 sets this threshold value to the threshold value setting part 36, thereafter the wireless reception quality measuring part 35 measures the level of a wireless reception quality. Then, the part 35 compares that measured value with the above-described threshold value set in the threshold value setting part 36 and, when that measured result has fallen below the threshold value, notifies this effect to the control part 32. Upon receipt of that notification, the control part 32 transmits the effect that the level of the wireless reception quality has fallen below the threshold value that has newly been set, to the base station control apparatus 1 via the communication part 31 and the base station 2a that is a relevant relay station (first reporting means).

After the performance of the above-described operation, the operation of the control part 32 is classified into two cases. A first case of them is the one wherein the deterioration speed in the level of the wireless reception quality received by the wireless mobile device 3 is high (namely, the case wherein it is presumed that the wireless mobile device 3 be in the course of rapidly moving away from the current cell zone of it). In that case, in order that the criterion in accordance with which the execution of the handover processing is determined may be reliably obtained, the wireless reception quality measuring part 35 of the control part 32 measures the level of the wireless reception quality at minimum intervals (hereinafter called "the short reporting-period") that are instructed from the base station control apparatus 1, until the point in time when the execution of the handover is instructed from the base station control apparatus 1. Simultaneously, it transmits that measured value, in the short periods, to the base station control apparatus 1 via the communication part 31 and the base station 2a that is a relevant relay station (second reporting means).

Also, second case of the operation that the control part 32 takes is the one wherein the deterioration speed of the level of the wireless reception quality received by the wireless mobile device 3 is low (namely, the one wherein it is presumed that the wireless mobile device 3 be in the course of slowly moving away from the current cell zone of it). In that case, in order that the load of the base station control apparatus's receiving the reports may be mitigated, the reporting operation that is followed by setting of stepwise changing threshold values transmitted from the base station control apparatus 1 to the threshold value setting part 36, measuring of the wireless reception quality level by the wireless reception quality measuring part 35, and comparing of each level with the threshold value is repeatedly carried out until the device 3 has its handover execution instructed from the base station control apparatus 1.

The handover control part 12 of the base station control apparatus 1 receives the above-described second-time report from the wireless mobile device 3 and obtains the reception time of the above-described notification by referring to the time-counting part 13. Simultaneously, the handover control part 12 refers to the previous reception time on the wireless reception quality from the wireless mobile device 3 that is already recorded in the mobile station reception information recording part 14. The handover control part 12, according to the difference between the both reception times and the difference (prescribed fixed value) between the previous and the present threshold value, calculates the ratio of the width of deterioration over which the level of the wireless reception quality received by the wireless mobile device 3 deteriorates to the passage length of time (namely the deterioration speed). The handover control part 12, thereafter, operates in two ways corresponding to the above-described two cases by comparing that calculated result and a prescribed deterioration speed. More specifically, in a case where the deterioration speed of the level of the wireless reception quality received by the wireless mobile device is high (namely in the case corresponding to the above-described first case), the handover control part 12 instructs the wireless mobile device 3 to transmit the level of its wireless reception quality in short periods (this period can be determined as being different according to the calculated result of the deterioration speed, for example, by being made shorter as the deterioration speed becomes higher). Also, the handover control part 12, according to the calculated result of the deterioration speed, estimates the level of the wireless reception quality in the next said short period (level estimating means) and, when it is determined that that estimated result falls below the threshold value at which handover should be executed, immediately instructs the device 3 to execute handover (handover control means).

Further, after having instructed the wireless mobile device 3 to transmit the level of the wireless reception quality in the short periods (periodical report instructing means) as stated above, the handover control part 12, one after another, receives the report of the level of the wireless reception quality that is sent from the wireless mobile device 3 in the above-described short periods. And the handover control part 12 records them into the mobile station reception information recording part 14. Simultaneously, according to those reports, the handover control part 12 estimates the level of the wireless reception quality in the next said short period and, when that estimated value falls below the threshold value at which handover should be executed, immediately instructs the wireless mobile device 3 to execute handover.

Also, in a case, as well, where no reports from the wireless mobile device 3 are received within the report period that has been designated, the handover control part 12 immediately instructs executing handover.

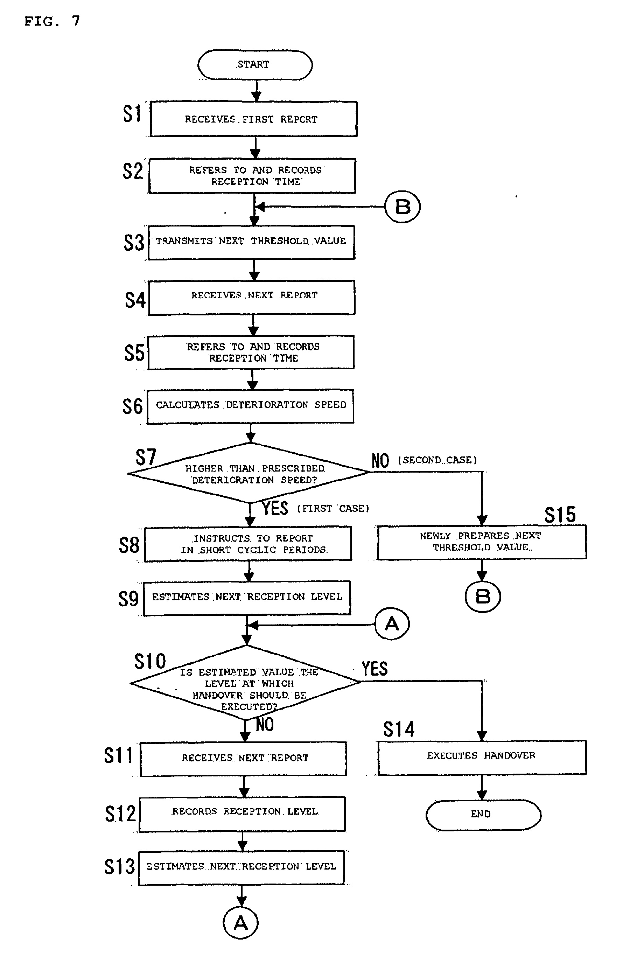

On the other hand, in a case where the deterioration speed of the level of the wireless reception quality received by the wireless mobile device 3 is low (namely in the case corresponding to the above-described second case), the handover control part 12 of the base station control apparatus 1 transmits stepwise-changing threshold values (this threshold value can be determined according to the calculated result of the above-described deterioration speed), by which the reporting level of the wireless reception quality that is to be reported is determined, one after another, to the wireless mobile device 3 via the communication processing part 11 and the base station 2a. It thereby monitors the transition of the deterioration. Simultaneously, during this monitoring period of time, the handover control part 12 calculates the ratio of the width of deterioration over which the level of the wireless reception quality received by the wireless mobile device 3 deteriorates to the passage length of time (namely the deterioration speed), by using the same means as that stated above. According to the calculated result, if the occasion demands, the operation of the handover control part 12 proceeds to the above-described first case (refer to FIG. 7 as later described).

Finally, when the handover control part 12 has received the reporting level that corresponds to the threshold value at which handover should be executed, the handover control part 12 instructs executing handover.

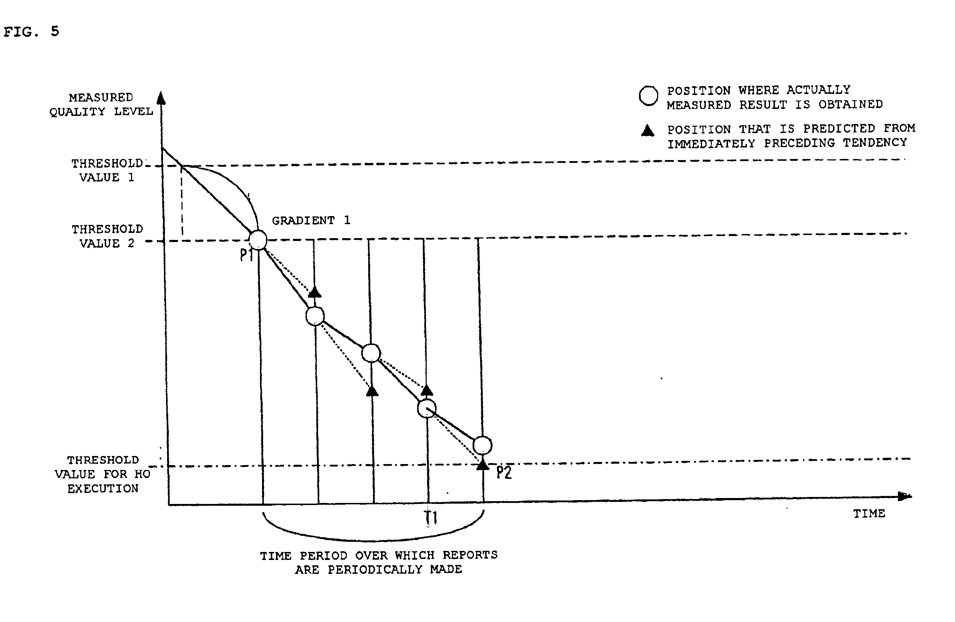

FIG. 5 illustrates an example of a graph showing the relationship between a wireless reception quality level and the passage of time in the case where the deterioration speed of the wireless reception quality level of a wireless mobile device controlled according to the method of controlling handover according to the embodiment of the present invention is high.

When the base station control apparatus 1 receives from the wireless mobile device 3 a notification of that the level of the wireless reception quality has fallen below a threshold value 1 that is set as an initial value, it gets that reception time by referring to the time-counting part 13, records it into the mobile station reception information recording part 14, and transmits to the wireless mobile device 3 a threshold value 2 by which there is determined the reporting level of the wireless reception quality to be reported next by the wireless mobile device 3 (the threshold value 1 > threshold value 2). Thereafter, the base station control apparatus 1 gets, by referring to the time-counting part 13, the time (the point in time P1) at which the report to the effect that the level of the wireless reception quality has fallen below the threshold value 2 has been received from the wireless mobile device 3. Then the apparatus 1, according to the difference between the previous reported time that is already recorded in the mobile station reception information recording part 14 and the present reported time (the point in time P1) and the difference between the threshold values 1 and 2 (a prescribed fixed value), calculates the deterioration speed of the wireless reception quality level received by the wireless mobile device 3. In a case where this deterioration speed is higher than a prescribed deterioration speed (in the case corresponding to the above-described case 1), the apparatus 1 instructs the wireless mobile device 3 to report the measured result of the wireless reception quality level in short periods (more specifically notifies the wireless mobile device 3 of the short period). Simultaneously, the apparatus 1 estimates the wireless reception quality level which will appear after one period that is next to the above-described short period, by using the deterioration speed that has been calculated above. And when having foreseen that that estimated value of this wireless reception quality level will fall below an HO execution threshold value that is the threshold value at which executing the handover processing is determined beforehand, the apparatus 1 in its handover control part 12 immediately executes handover processing.

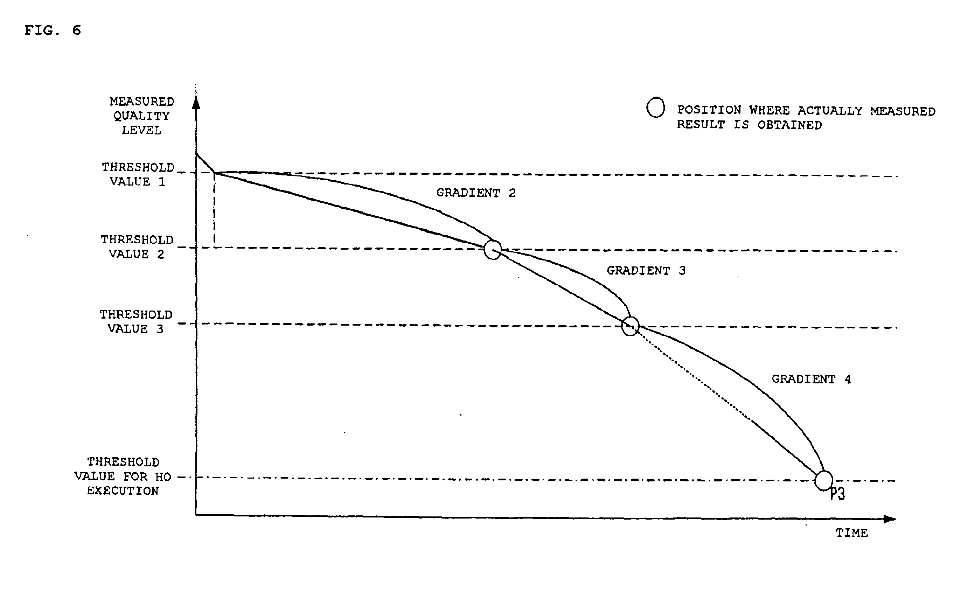

FIG. 6 illustrates an example of a graph showing the relationship between a wireless reception quality level and the passage of time in the case where the deterioration speed of the wireless reception quality level of a wireless mobile device controlled according to the method of controlling handover according to the embodiment of the present invention is low;

When the handover control part 12 of the base station control apparatus 1 receives from the wireless mobile device 3 a notification of that the level of the wireless reception quality has fallen below a threshold value 1 that is set as an initial value, it gets that reception time by referring to the time-counting part 13, records it into the mobile station reception information recording part 14, and transmits to the wireless mobile device 3 a threshold value 2 by which there is determined the reporting level of the wireless reception quality to be reported next by the wireless mobile device 3 (the threshold value 1 > threshold value 2). Thereafter, the handover control part 12 of the base station control apparatus 1 gets, by referring to the time-counting part 13, the reception time at which the report to the effect that the level of the wireless reception quality has fallen below the threshold value 2 has been received from the wireless mobile device 3. Then the apparatus 1, according to the difference between the previous reported time that is already recorded in the mobile station reception information recording part 14 and the present reported time (the point in time P1) and the difference between the threshold values 1 and 2 (a prescribed fixed value), calculates the deterioration speed of the wireless reception quality level received by the wireless mobile device 3. In a case where this deterioration speed is lower than a prescribed deterioration speed (in the case corresponding to the above-described case 2), the handover control part 12 of the apparatus 1 transmits a threshold value (here a threshold value 3) by which the reporting level of the wireless reception quality to be reported next is determined to the wireless mobile device 3 via the communication processing part 11 and the base station 2a.

Finally, when the handover control part 12 has received the report that corresponds to the threshold value at which handover should be executed (P3), the handover control part 12 instructs executing handover.

FIG. 7 is a flow chart illustrating the operation of the base station control apparatus according to the embodiment of the present invention.

Hereafter, referring to FIGs. 1 to 6, the operation of the base station control apparatus 1 according to the embodiment of the present invention will be explained using the flow chart illustrated in FIG. 7.

First, the communication processing part 11 of the base station control apparatus 1 receives from the wireless mobile device 3 an initial report to the effect that the level of the wireless reception quality measured in the wireless mobile device 3 has fallen below the threshold value that is initially set in the threshold value setting part 36 of the wireless mobile device 3. Then it notifies it to the handover control part 12 (step S1).

Upon receipt of that notification, the handover control part 12 of the base station control apparatus 1 reads the time that corresponds to that reception by referring to the time counting part 13 and records this reception time into the mobile station reception information recording part 14 (step S2).

Next, the handover control part 12 of the base station control apparatus 1 transmits a threshold value that is to be set in the threshold value setting part 36 of the wireless mobile device 3, to the wireless mobile device 3 (step S3) and records the threshold value in the mobile station reception information recording part 14. That threshold value, if the processing goes on from the step S2, is a prescribed value that is determined beforehand, whereas, if the processing goes on from a step S15, that threshold value is a value that has been newly prepared in the step S15.

Next, the communication processing part 11 of the base station control apparatus 1 receives the next report from the wireless mobile device 3 (step S4). That report from the wireless mobile device 3 is the one that indicates that the level of the wireless reception quality that has been measured in the wireless mobile device 3 has fallen below the threshold value that was transmitted in the step S3 to the wireless mobile device 3.

Upon receipt of that next report, the handover control part 12 of the base station control apparatus 1 checks whether the current threshold value is an HO execution threshold value. If the current threshold value is that HO execution threshold value, the handover control part 12 instructs the wireless mobile device 3 to execute handover and, if otherwise, the handover control part 12, by referring to the time counting part 13, reads the time that corresponds to that reception and records this reception time into the mobile station reception information recording part 14 (step S5).

Next, the handover control part 12 of the base station control apparatus 1, according to the difference between the reception times recorded in the steps S2 and S5 and the difference between the threshold value initially set in the threshold value setting part 36 of the wireless mobile device 3 and the threshold value transmitted in the step S3 (a prescribed fixed value), calculates the deterioration speed of the wireless reception quality received by the wireless mobile device 3 (namely the moving speed of the wireless mobile device 3).

Next, the handover control part 12 of the base station control apparatus 1 checks whether the deterioration speed of the wireless reception quality received by the wireless mobile device 3, that was calculated above, higher than a prescribed deterioration speed (step S7). In a case where the deterioration speed of the wireless reception quality is higher than the prescribed deterioration speed, the processing proceeds to a step S8, while, if otherwise, the processing proceeds to the step S15. (step S6)

In a case where the deterioration speed of the wireless reception quality is higher than the prescribed deterioration speed, the handover control part 12 of the base station control apparatus 1 instructs the wireless mobile device 3 to report the wireless reception quality level at minimum intervals (in short periods) (step S8).

Next, according to the deterioration speed of the wireless reception quality received by the wireless mobile device 3, that was calculated in the step S6, (the gradient of the wireless reception quality level to the time axis), the handover control part 12 of the base station control apparatus 1 estimates the wireless reception quality level that will be received by the wireless mobile device 3 at the point in time that has come when the time that corresponds to the above-described minimum interval has lapsed (step S9).

Next, the handover control part 12 of the base station control apparatus 1 checks whether the above-estimated wireless reception quality level has arrived at the level (threshold value) prescribing the execution of the handover (step S10). If having not arrived at the level prescribing the execution of the handover, the processing proceeds to a step S11. If having arrived at this level that prescribes, the handover control part 12 instructs execution of the handover in a step S13, thereafter the processing is terminated.

If having not arrived at the level prescribing the execution of the handover, the communication processing part 11 of the base station control apparatus 1 receives the next report from the wireless mobile device 3 (step S11). That report from the wireless mobile device 3 is the one that represents the level of the wireless reception quality that has been measured in the wireless mobile device 3 in the above-described short period.

Next, the handover control part 12 of the base station control apparatus 1 records the above-reported wireless reception quality level into the mobile station reception information recording part 14 (step S12).

Next, the handover control part 12 of the base station control apparatus 1 calculates the deterioration speed of the wireless reception quality level received by the wireless mobile device 3, by referring to the above-reported wireless signal level, the previous wireless reception quality level recorded in the mobile station reception information recording part 14 (this previous level may be an initial value), and the length of time that corresponds to the above-described minimum interval. Simultaneously, the handover control part 12 estimates the level of the wireless reception quality immediately after the next said short one period (step S13) and thereafter returns to the step S10.

Incidentally, after having received the next report in the step S11, it may be arranged to calculate the deterioration speed from this reception level and this reporting period again and, if that deterioration speed is lower than a prescribed deterioration speed, to cause the processing to move to the step S15 so as to return the processing wherein report is made using the threshold value.

On the other hand, if in the step S7 it has been determined that the deterioration speed of the wireless reception quality is not higher than the prescribed deterioration speed, in the step S15 the handover control part 12 newly prepares a threshold value that is to be set in the threshold value setting part 36 of the wireless mobile device3 next. Then the processing returns to the step S3. This threshold value that is newly prepared may be a prescribed value that has been set beforehand or a value that has been obtained by performing calculation according to the deterioration speed of the wireless reception quality level that has been calculated in the step S6.

Incidentally, at least a part of the processing executed by the handover control part 12 of the base station control apparatus 1 according to the present invention may be executed through computer control. In addition, a program that causes that processing to be executed by a computer in accordance with the procedure illustrated in the flow chart of FIG. 7 may be stored in not only a semiconductor memory but also a computer-readable recording medium such as a CD-ROM and a magnetic tape and be distributed. And the computer under the category of that at least a microcomputer, personal computer, and general-purpose computer fall may read out that program from that recording medium for executing the same.

Also, although in this embodiment the control of the handover operation is executed in the handover control part 12 of the base station control apparatus 1, it is also possible to construct that this processing is executed in the base stations 2a to 2n.

As has been described above, according to this embodiment, there is calculated the deterioration speed of the wireless reception quality level by using the passage length of time that is needed until the wireless reception quality level that is measured in the wireless mobile device 3 falls below a prescribed threshold value. In a case where the base station control apparatus 1 has detected that the wireless mobile device 3 is rapidly moving as a result of that deterioration speed being high, an instruction to set the report period of the wireless reception quality to be short is sent from the base station control apparatus 1 to the wireless mobile device 3. Simultaneously with this, in the base station control apparatus 1, there is estimated the wireless reception quality level immediately after the next one short period according to the deterioration speed. This brings about the effect of enabling reliable execution of the handover processing.

In a case where the base station control apparatus 1 has detected that the wireless mobile device 3 is slowly moving by the same means, there is withdrawn the execution of the handover processing in the wireless mobile device 3 until the level of the wireless reception quality becomes low. By doing so, there is the effect that the load of the base station control apparatus executing the handover processing that follows the handover processing on the wireless mobile device side can be mitigated.

Incidentally, although in the above-described embodiment when the deterioration speed is low a relevant explanation has been given in the way of performing reports based on the use of threshold values until the value that corresponds to the threshold value reaches the HO execution threshold value, it may be arranged that, at a stage where the reception quality has approached the HO execution threshold value to some extent, the way of reporting be switched to the periodical report irrespective of the deterioration speed.

Also, although in the above-described embodiment the wireless mobile device executes handover according to the instruction from the base station control apparatus even in the case of the reports made based on the threshold values, it is possible to set the HO execution threshold value, beforehand, in the wireless mobile device. By doing so, it may be arranged that, in a case where the deterioration speed is low and reports based on the threshold values are executed, when the wireless reception quality that has been measured has fallen below the HO execution threshold value, handover be executed without receiving an instruction from the base station control apparatus.

### [EFFECTS OF THE INVENTION]

As has been explained above, according to the handover control method of performing handover control to the wireless mobile device, base station control apparatus, and wireless mobile device according to the present invention, it is possible to execute handover control corresponding to the status of movement of the wireless mobile device, especially to reliably execute handover processing at the time, as well, when the wireless mobile device is in the course of rapidly exiting from the current cell zone thereof.

Also, when the wireless mobile device is slowly exiting from the current cell zone thereof, it is possible to mitigate the load that is needed for executing handover processing.

### [BRIEF DESCRIPTION OF THE DRAWINGS]

[Fig. 1]
   FIG. 1 is a construction view illustrating the entire construction of the system that adopts a method of controlling handover to a wireless mobile device according to an embodiment of the present invention;
[Fig. 2]
   FIG. 2 is a construction view illustrating the construction of a base station control apparatus according to the embodiment of the present invention;
[Fig. 3]
   FIG. 3 is a construction view illustrating the construction of the wireless mobile device according to the embodiment of the present invention;
[Fig. 4]
   FIG. 4 is an explanatory view for explaining the method of controlling handover to a wireless mobile device according to the embodiment of the present invention;
[Fig. 5]
   FIG. 5 illustrates an example of a graph showing the relationship between a wireless reception quality level and the passage of time in the case where the deterioration speed of the wireless reception quality level of a wireless mobile device controlled according to the method of controlling handover according to the embodiment of the present invention is high;
[Fig. 6]
   FIG. 6 illustrates an example of a graph showing the relationship between a wireless reception quality level and the passage of time in the case where the deterioration speed of the wireless reception quality level of a wireless mobile device controlled according to the method of controlling handover according to the embodiment of the present invention is low; and
[Fig. 7]
   FIG. 7 is a flow chart illustrating the operation of the base station control apparatus according to the embodiment of the present invention.

### [DESCRIPTION OF THE SYMBOLS]

- 1: base station control apparatus
- 2a, 2b,: 2n base station
- 3: wireless mobile device
- 10: communication line
- 11: communication processing part
- 12: handover control part
- 13: time counting part
- 14: mobile station reception information recording part
- 20: mobile wireless communication line
- 31: communication part
- 32: control part
- 33: memory part
- 34: report-period setting part
- 35: wireless reception quality measuring part
- 36: threshold value setting part
- 37: handover executing part

## Claims

1. A method of performing handover control of a wireless mobile device, which is executed in a wireless network that has a base station control apparatus that controls switching of a wireless channel of the mobile station via a base station that relays wireless communication of the mobile station, comprising:
a deterioration speed calculation step of, according to a report made from the mobile station to the base station control apparatus and regarding a reception quality of a wireless channel that the mobile station is using, calculating the deterioration speed at which the level of the reception quality deteriorates; and
a condition determining step of, according to the deterioration speed, determining a condition on which the reception quality is to be reported and/or a condition on which handover is to be triggered.

2. The method of performing handover control of a wireless mobile device according to claim 1, comprising:
a periodical report instructing step of, when the level of the reception quality deteriorates at a speed that exceeds a prescribed deterioration speed, instructing the mobile station to periodically report the reception quality from the base station control apparatus;
a periodical report executing step of executing the periodic report from the mobile station to the base station control apparatus according to the instruction from the base station control apparatus;
a level estimating step of, according to the reported reception quality level, the period, and the deterioration speed, estimating the level of the reception quality that will come after the passage of a one period of the periods;
a comparing step of comparing the level of the reception quality that has been estimated and the handover execution threshold value;
a handover execution instructing step of, according to the compared result, instructing the mobile station to execute handover from the base station control apparatus; and
a handover executing step of, according to the instruction to execute the handover, executing handover in the mobile station.

3. The method of performing handover control of a wireless mobile device according to claim 2, wherein the higher the deterioration speed is, the shorter the period of the report becomes.

4. The method of performing handover control of a wireless mobile device according to claim 2 or 3, wherein, in a case where the base station control apparatus has not received the report within the report period that has been designated, instructing the execution of the handover is performed from the base station control apparatus to the mobile station.

5. The method of performing handover control of a wireless mobile device according to one of claims 1 to 4, comprising:
a threshold value setting step of, when the level of the reception quality deteriorates at a speed that is lower than a prescribed deterioration speed, instructing stepwise changing threshold values for performing the next reports from the base station control apparatus to the mobile station;
a reporting step of, when in the mobile station the level of the reception quality corresponding to the wireless channel of the mobile station has fallen below the threshold value, reporting in the mobile station;
a detecting step of detecting that the level of the reception quality that has been reported has arrived at the handover execution threshold value;
a handover execution instructing step of, according to the detected result, instructing the mobile station to execute handover from the base station control apparatus; and
a handover executing step of, according to the instruction to execute the handover, executing handover in the mobile station.

6. A base station control apparatus, which is adapted to control switching of the wireless channel of a mobile station via a base station that relays wireless communication of the mobile station, comprising:
deterioration speed calculation means that, according to a report made from the mobile station and regarding a reception quality of a wireless channel that the mobile station is using, calculates the deterioration speed at which the level of the reception quality deteriorates; and
condition determining means that, according to the deterioration speed, determines a condition on which the reception quality is to be reported and/or a condition on which handover is to be triggered.

7. The base station control apparatus according to claim 6, comprising:
periodical report instructing means that, when the level of the reception quality deteriorates at a speed that exceeds a prescribed deterioration speed, instructs the mobile station to periodically report the reception quality;
level estimating means that, according to the reported reception quality level, the period, and the deterioration speed, estimates the level of the reception quality that will come after the passage of a one period of the periods; and
handover control means that, according to the estimated reception quality level, determines switching of the wireless channel of the mobile station.

8. The base station control apparatus according to claim 6, comprising threshold value setting means that, when the level of the reception quality deteriorates at a speed that is lower than a prescribed deterioration speed, instructs stepwise changing threshold values for performing the next reports from the base station control apparatus to the mobile station.

9. A wireless mobile device, which is adapted to execute switching of a wireless channel corresponding thereto according to an instruction made from a base station control apparatus via a base station that relays the wireless communication, comprising:
wireless reception quality measuring means that measures the reception quality of the wireless channel that the wireless mobile station is using;
first reporting means that, when the level of the reception quality that has been measured has become lower than a threshold value that has been set beforehand or the threshold value instructed by the base station control apparatus to the wireless mobile device, reports to the base station control apparatus;
second reporting means that reports the reception quality that has been measured to the base station control apparatus in periods that the base station control apparatus instructs to the wireless mobile device; and
handover executing means that executes switching of the wireless channel according to the instruction from the base station control apparatus.
